# EUROPEAN PATENT APPLICATION

(11) **EP 2 706 706 A1**
(43) Date of publication of application: **12.03.2014**
(21) Application number: 13163366.1
(22) Date of filing: 11.04.2013
(51) Int. Cl.: H04L 12/437

(54) **Backup system of ring network and backup method of ring network**

(30) Priority: 07.09.2012 TW 101132814
(71) Applicant: Etherwan Systems, Inc., 231 New Taipei City (TW)
(72) Inventor: Pao, Chih-Hsiung, 231 New Taipei City (TW); Wei, Liang-Tai, 231 New Taipei City (TW)
(74) Representative: Viering, Jentschura & Partner Patent- und Rechtsanwälte

(57) **Abstract**

A backup system of a ring network (100) and a backup method of a ring network are provided. The backup system of a ring network (100) includes a plurality of switches (SW1, SW2, SW3, SW4). Each switch (SW1, SW2, SW3, SW4) includes two main connection ports (Pm) and two redundant connection ports (Pr). One of the two main connection ports (Pm) of each switch (SW1, SW2, SW3, SW4) is connected to one of the two main connection ports (Pm) of an adjacent switch (SW1, SW2, SW3, SW4) via a main link (110), and one of the two redundant connection ports (Pr) of each switch (SW1, SW2, SW3, SW4) is connected to one of the redundant connection ports (Pr) of an adjacent switch (SW1, SW2, SW3, SW4) via a redundant link (130). The main links (110) are preset to be in a work state, and the redundant links (130) are preset to be in a backup state. When one of the main links (110') is faulty, the redundant link (130') corresponding to the faulty main link (110') is converted to be in the work state.

## Description

### BACKGROUND

### Technical Field

The disclosure relates to a ring network, and particularly to a backup system of a ring network and a backup method of a ring network.

### Related Art

Networks may be simply classified into three types of networks such as a Local Area Network (LAN), a Metropolitan Area Network (MAN), and a Wide Area Network (WAN) in terms of coverage. The LAN is a network with a smallest coverage, and the coverage is generally the same office, the same building, or the same campus. Currently, Ethernet is one of the most common types of LAN architecture.

The network architecture not only refers to a topology of a network, but also includes an entity medium of a network and a data access mode thereof. The Open System Interconnection (OSI) reference model is network architecture in an ideal state. In the real world, the network architecture includes many types of network architecture such as Ethernet, Token ring, ARCnet, AppleTalk, and Fiber Distributed Data Interface (FDDI).

A ring network is a network topology structure. Nodes in the network are serially connected to form a closed loop. Each node can communicate with any other node. Generally, the current ring network architecture is often applied to many LANs or industrial automation systems. Each network node is provided with a switch and is connected to a relevant apparatus via the switch, to provide a network information exchange function.

However, when all apparatuses in the system are connected only through a single large ring network, reliability and stability of the whole ring network are easily reduced, and transmission quality and efficiency are also affected.

### SUMMARY

In view of the above problem, the disclosure provides a backup system of a ring network and a backup method of a ring network, to solve the problem in the prior art of low reliability and stability of the ring network.

An embodiment of the disclosure provides a backup system of a ring network, including a plurality of switches. Each switch includes two main connection ports and two redundant connection ports. One of the two main connection ports of each switch is connected to one of the two main connection ports of an adjacent switch via a main link, so as to form a main ring network in a serial connection manner. One of the two redundant connection ports of each switch is connected to one of the redundant connection ports of an adjacent switch via a redundant link, so as to form a redundant ring network in a serial connection manner. The main links are preset to be in a work state, the redundant links are preset to be in a backup state. When one of the main links is faulty, the redundant link corresponding to the faulty main link is converted to be in the work state.

Another embodiment of the disclosure provides a backup method of a ring network, including: providing a plurality of main links, to serially connect a plurality of switches to form a main ring network, where one of two main connection ports of each switch is connected to one of two main connection ports of an adjacent switch via a main link; providing a plurality of redundant links, to serially connect a plurality of switches to form a redundant ring network, where one of two redundant connection ports of each switch is connected to one of two redundant connection ports of an adjacent switch via a redundant link; setting one of the main connection ports as a blocking port and the rest main connection ports as forwarding ports, so that the main link is preset to be in a work state; setting the redundant connection ports as blocking ports, so that the redundant link is preset to be in a backup state; detecting connection states of the main links; and when detecting that one of the main links is faulty, enabling the redundant connection ports connected to the redundant link corresponding to the faulty main link to become forwarding ports.

In the backup system of a ring network and the backup method of a ring network according to the disclosure, as long as the main link and the redundant link between two switches are both faulty at less than two places, even if multiple main links and/or redundant links are faulty, the whole network can still continue working normally. Therefore, the backup system of a ring network of the disclosure can solve the problem of low reliability and stability of the conventional ring network.

### BRIEF DESCRIPTION OF THE DRAWINGS

The disclosure will become more fully understood from the detailed description given herein below for illustration only, and thus not limitative of the disclosure, wherein:
FIG. 1 is a schematic diagram of a backup system of a ring network according to an embodiment;
FIG. 2 is a schematic diagram for illustrating that a main link is faulty according to an embodiment;
FIG. 3 is a schematic diagram of inside of a switch according to an embodiment;
FIG. 4 is a schematic diagram for illustrating that a main link and a redundant link corresponding to each other are both faulty according to an embodiment;
FIG. 5 is a schematic diagram of a backup system of a ring network according to another embodiment;
FIG. 6 is a flow chart (1) of a backup method of a ring network according to an embodiment;
   and
FIG. 7 is a flow chart (2) of a backup method of a ring network according to an embodiment.

### DETAILED DESCRIPTION

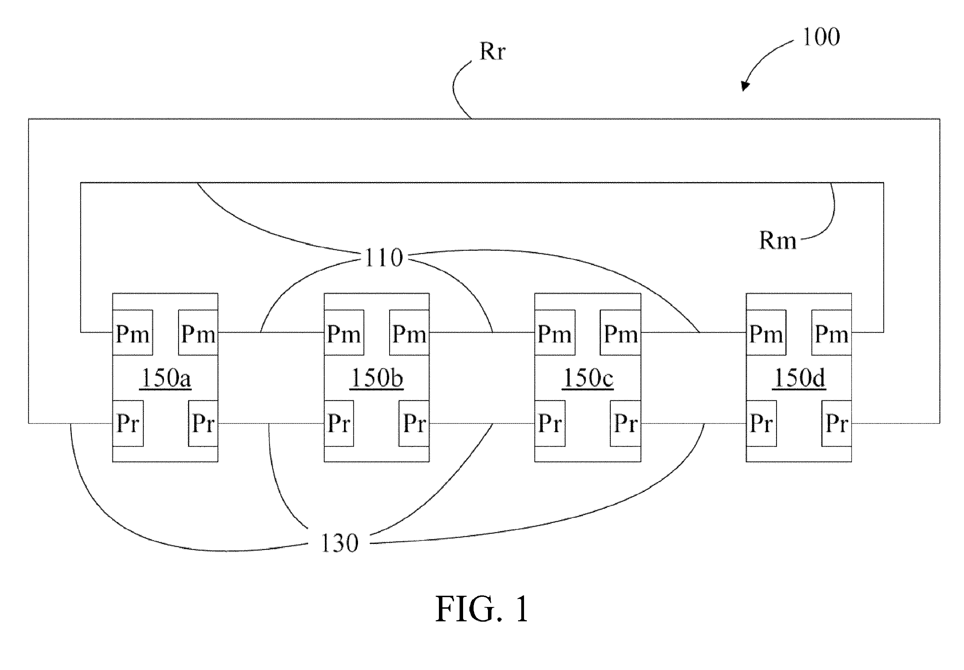

FIG. 1 is a schematic diagram of a backup system 100 of a ring network according to an embodiment of the disclosure.

As shown in FIG. 1, the backup system 100 of a ring network includes a plurality of switches 150 (for example, a switch 150a, a switch 150b, a switch 150c and a switch 150d shown in FIG. 1). Each switch 150 includes two main connection ports Pm and two redundant connection ports Pr. One of the two main connection ports Pm of each switch 150 is connected to one of the two main connection ports Pm of an adjacent switch 150 via a main link 110, so as to form a main ring network Rm in a serial connection manner. One of the two redundant connection ports Pm of each switch 150 is connected to one of the two redundant connection ports Pr of an adjacent switch 150 via a redundant link 130, so as to form a redundant ring network Rr in a serial connection manner. That is to say, the backup system 100 of a ring network is a dual ring network formed by the main ring network Rm and the redundant ring network Rr.

Here, at the beginning of network connection, the main link 110 is preset to be in a work state, and the redundant link 130 is preset to be in a backup state. That is to say, in principle, the main connection port Pm is preset as a forwarding port, for forwarding a received packet, and the redundant connection port Pr is preset as a blocking port, for not forwarding a received packet. However, in order to avoid a broadcast storm caused by the fact that the main connection port Pm of the ring network continuously forwards the packet, one of the main connection ports Pm in the main ring network Rm is preset as a blocking port, and the rest main connection ports Pm are preset as forwarding ports.

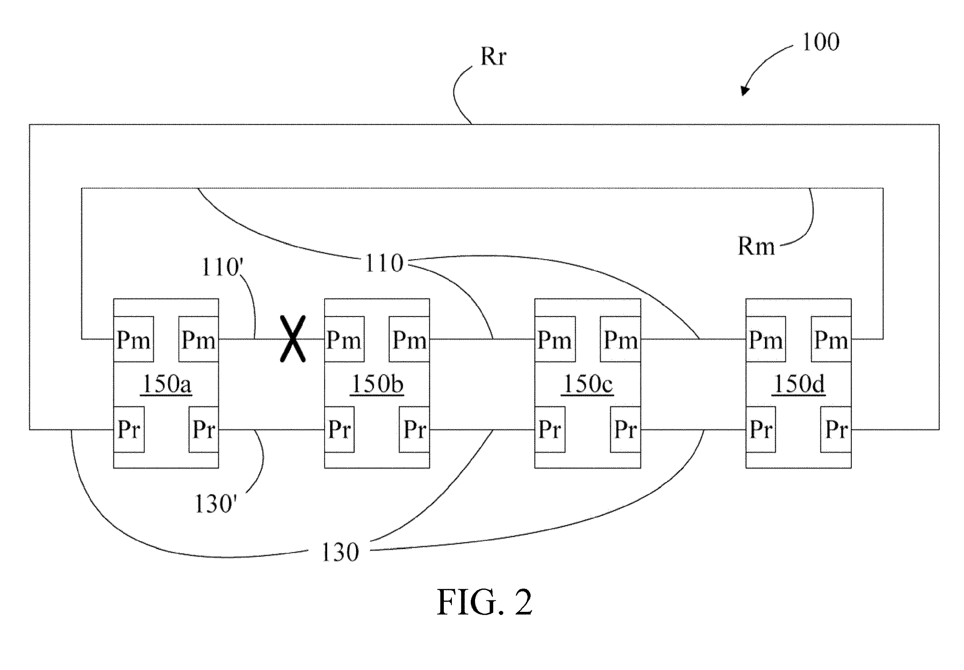

FIG. 2 is a schematic diagram for illustrating that the main link 110 is faulty according to an embodiment of the disclosure. Please refer to FIG. 2, in which when one (for example, a main link 110' shown in FIG. 2), of the main links 110 is faulty, a redundant link 130' corresponding to the faulty main link 110' is converted to be in the work state, to replace the faulty main link 110'. That is to say, when the switch 150a detects that the main link 110' connected to the main connection port Pm for outputting a packet is faulty, the redundant connection port Pr forwards the packet received at the main connection port Pm to the next switch 150b.

During general operation, each switch 150 detects its own connection state, to detect whether a network link (that is, a certain main link 110 or a certain redundant link 130), is faulty.

Here, link failures may include situations that a packet cannot be delivered between two switches, such as connection failure, device failure, and connection correction. The main link 110 is a bi-directional communication link, and the redundant link 130 is also a bi-directional communication link. The backup system 100 of a ring network may be substantially a ring Ethernet, including a network link (that is, the main link 110 or the redundant link 130), for example, a network cable or a wireless communication medium, and a plurality of switches 150 connected via the network link.

The network cable may be a twisted pair cable, a coaxial cable or a fiber optic cable.

The switch 150 may work in different layers of the OSI network model.

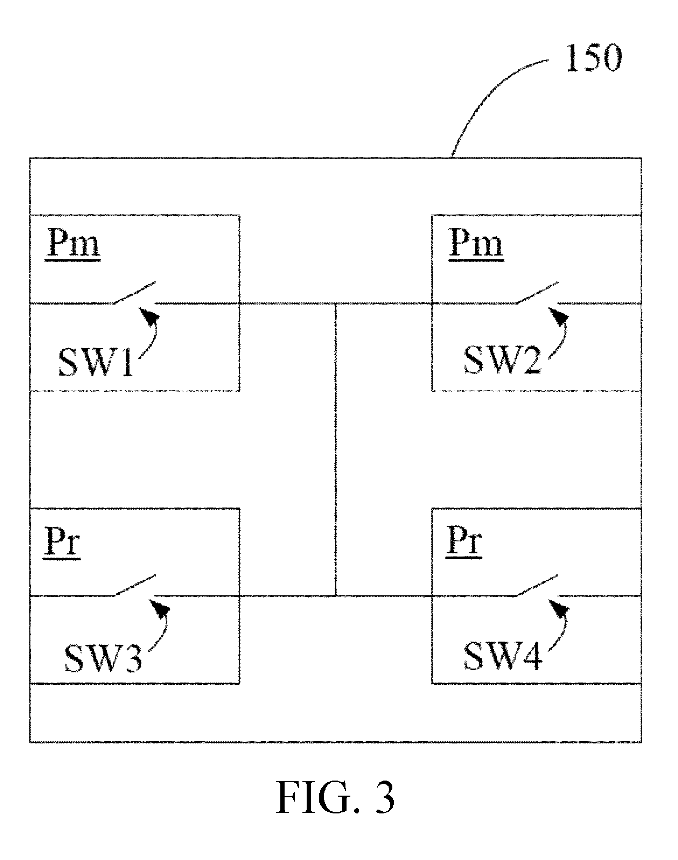

FIG. 3 is a schematic diagram of inside of the switch 150 according to an embodiment of the disclosure.

As shown in FIG. 3, the connection ports (that is, the main connection ports Pm and the redundant connection ports Pr), in the switch 150 each include a switch (SW1 to SW4). The two main connection ports Pm include a switch SW1 and a switch SW2 respectively, and the switch SW1 and the switch SW2 are connected to each other through a signal. The two redundant connection ports Pr include a switch SW3 and a switch SW4 respectively, and the switch SW3 and the switch SW4 are connected to each other through a signal. The switch SW1 and the switch SW2 are connected to each other through a signal, and the switch SW3 and the switch SW4 are connected to each other through a signal, so that the main ring network Rm and the redundant ring network Rr perform transmission alternately (that is, the main ring network Rm is replaced with the redundant ring network Rr, or the redundant ring network Rr is replaced with the main ring network Rm).

When the two main links 110 connected to the switch 150 are both in the work state, the switch SW1 and the switch SW2 are both turned on, so that the two main connection ports Pm can forward packets received by the two main connection ports Pm to each other. That is to say, a packet received by one of the main connection ports Pm may be forwarded to the other one of the main connection ports Pm. In this case, the switch SW3 and the switch SW4 are both turned off, that is, the two redundant connection ports Pr are blocking ports and do not forward a received packet.

The switch 150a shown in FIG. 2 is taken as an example. When the main link 110' is faulty, the main connection port Pm connected to the main link 110' is converted to a blocking port, and the switch SW2 is turned off, so that the two main connection ports Pm do not forward a packet to each other. Meanwhile, the redundant connection port Pr connected to the redundant link 130' is converted to a forwarding port, and the switch SW4 is turned on, so that a packet received at the main connection port Pm from the switch 150d can be forwarded to the next switch 150b at the redundant connection port Pr via the switches SW1 and SW4. In another aspect, a packet received at the redundant connection port Pr connected to the redundant link 130' is forwarded to the next switch 150d at the main connection port Pm via the switches SW4 and SW1.

Similarly, detecting that the main link 110' is faulty, the switch 150b shown in FIG. 2 converts the main connection port Pm connected to the main link 110' to a blocking port, and the switch SW1 is turned off, so that the two main connection ports Pm of the switch 150b do not forward a packet to each other. Meanwhile, the redundant connection port Pr of the switch 150b connected to the redundant link 130' is converted to a forwarding port, and the switch SW3 is turned on, so that a packet received at the redundant connection port Pr may be forwarded to the next switch 150c at the main connection port Pm connected to the normal main link 110 via the switches SW3 and SW2 in order. In another aspect, a packet received at the main connection port Pm connected to the normal main link 110 from the switch 150c is forwarded to the next switch 150a at the redundant connection port Pr via the switches SW2 and SW3 in order.

That is to say, when one (here, the main link 110'), of the main links 110 is faulty, the two main connection ports Pm connected to the faulty main link 110' become the blocking ports, and the two redundant connection ports Pr connected to the redundant link 130' corresponding to the faulty main link 110' become the forwarding ports.

It should be noted that, in some embodiments, after the faulty main link 110' is repaired, the main link 110' stays in a backup state, and the corresponding redundant link 130' (that is, the other network link connected between the same two switches 150), is still in the work state. The faulty main link 110' is converted to be in the work state when the corresponding redundant link 130' is faulty.

Here, after the redundant link 130' replaces the main link 110', the backup system 100 of a ring network can continue working normally. If the faulty main link 110' is converted to be in the work state from the backup state immediately after being repaired, the faulty main link 110' cannot receive a packet during conversion, so the packet is lost. Therefore, the faulty main link 110' or the faulty redundant link 130' is maintained in the backup state after being repaired, so that it can be avoided that the network stability is affected due to the packet loss.

The switches SW1 to SW4 may be included in a Programmable Logic Controller (PLC) such as a Field Programmable Gate Array (FPGA).

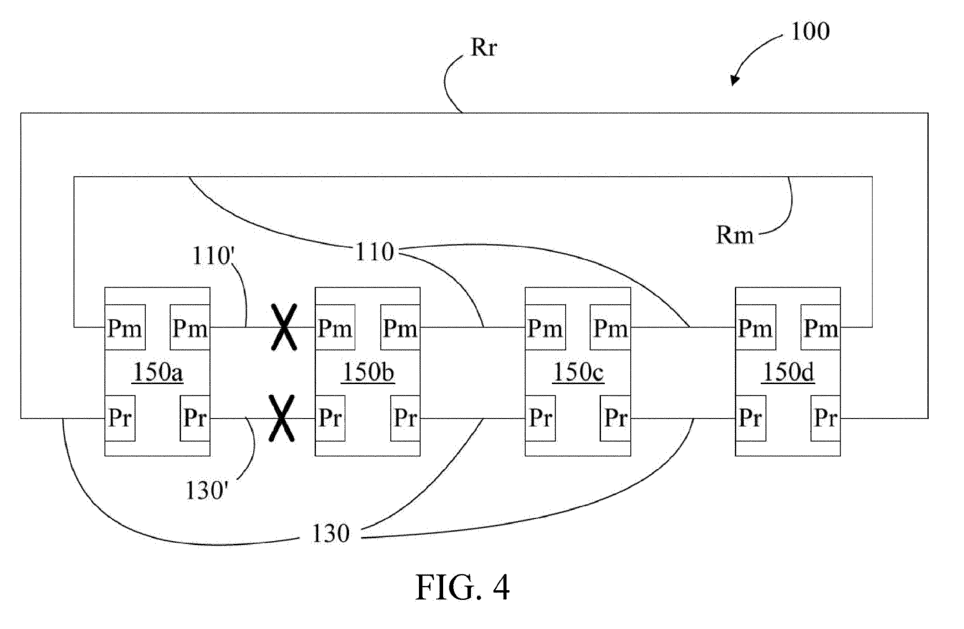

FIG. 4 is a schematic diagram for illustrating that the main link 110 and the redundant link 130 corresponding to each other are both faulty according to an embodiment of the disclosure.

As shown in FIG. 4, in contrast to FIG. 2, in addition to a main link 110' of the backup system 100 of a ring network, a redundant link 130' corresponding to the main link 110' is faulty. That is to say, the main link 110' and the redundant link 130' between two adjacent switches 150 (here, the switches 150a and 150b), are both faulty.

In this case, the two main connection ports Pm connected to the faulty main link 110' and the two redundant connection ports Pr connected to the faulty redundant link 130' are set as blocking ports. Moreover, the main connection port Pm preset as the blocking port is converted to a forwarding port. In the redundant ring network Rr, in addition to the foregoing two redundant connection ports Pr, the rest redundant connection ports Pr are maintained in an original state, that is, are still blocking ports.

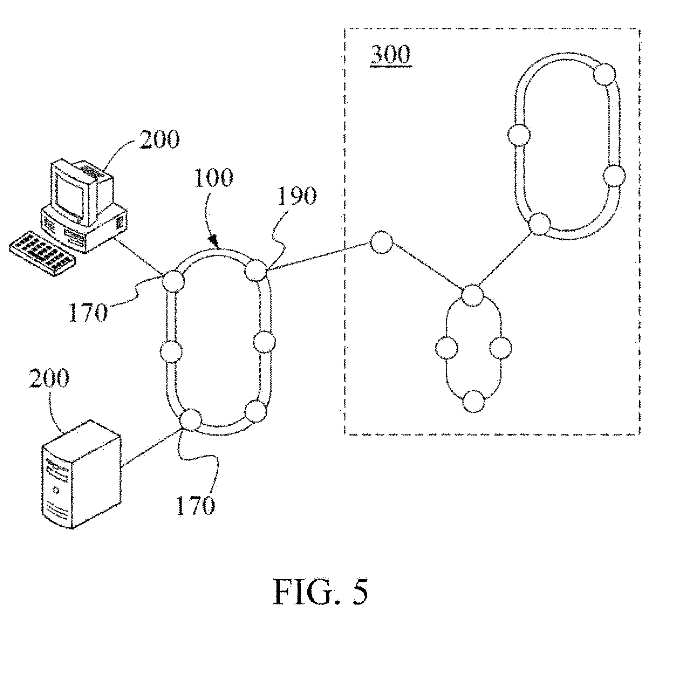

FIG. 5 is a schematic diagram of a backup system 100 of a ring network according to another embodiment of the disclosure.

As shown in FIG. 5, in addition to the main connection port 110 and the redundant connection port 130, the switch 150 may further include a terminal connection port 170, so that the switch 150 is connected to a user end. The user end may be an industrial computer apparatus, a work station, a server, a personal computer, or the like.

Moreover, the switch 150 may further have an interfacing connection port 190, so that the switch 150 is connected to other networks 300 and the switch 150 and other networks 300 coexist. As shown in FIG. 5, the network 300 may include, but is not limited to, a linear network, a ring network and the backup system 100 of a ring network according to the embodiment of the disclosure.

In some embodiments, the switch 150 works at the second layer (that is, the data link layer), of the OSI network module. Each switch 150 is stored with a media access control (MAC) address list, to record a MAC address of each node (for example, the switch 150), in the network. As shown in FIG. 2, upon detecting that a network link (that is, the main link 110 or the redundant link 130), is faulty, the switch 150a or the switch 150b updates the MAC address list, and broadcasts the updated MAC address list to the rest switches 150. Therefore, the rest switches 150 update its own MAC addresses list according to the updated MAC address list, and it is unnecessary for each switch 150 to clear existing MAC addresses list and learn again. In this way, the quantity of data for broadcasting packets can be reduced.

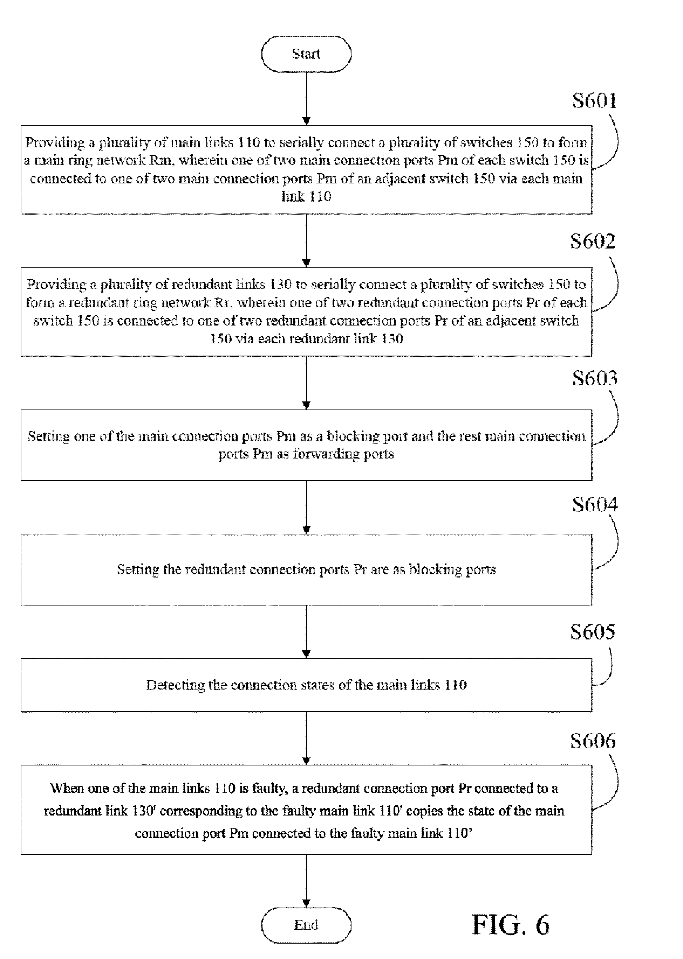

FIG. 6 is a flow chart (1) of a backup method of a ring network according to an embodiment of the disclosure.

As shown in FIG. 6, first, a plurality of main links 110 is provided to serially connect a plurality of switches 150 to form a main ring network Rm. One of two main connection ports Pm of each switch 150 is connected to one of two main connection ports Pm of an adjacent switch 150 via each main link 110 (step S601).

Then, a plurality of redundant links 130 is provided to serially connect a plurality of switches 150 to form a redundant ring network Rr. One of two redundant connection ports Pr of each switch 150 is connected to one of two redundant connection ports Pr of an adjacent switch 150 via each redundant link 130 (step S602).

Here, the execution order of step S601 and step S602 can be reversed.

After the main ring network Rm and the redundant ring network Rr are formed, one of the main connection ports Pm is set as a blocking port, and the rest main connection ports Pm are set as forwarding ports, so that the main link 110 is preset to be in a work state (step S603).

Moreover, the redundant connection ports Pr are set as blocking ports, so that the redundant link 130 is preset to be in a backup state (step S604).

Here, the execution order of step S603 and step S604 can be reversed.

Finally, connection states of the main links 110 are detected (step S605). When it is detected that one (for example, the main link 110'), of the main links 110 is faulty, a redundant connection port Pr connected to a redundant link 130' corresponding to the faulty main link 110' copies the state of the main connection port Pm connected to the faulty main link 110' (step S606). In one case, the redundant connection port Pr connected to the redundant link 130' becomes a forwarding port, so that the redundant link 130' replacing the main link 110' delivers a packet. In the other case, the redundant connection port Pr connected to the redundant link 130' becomes a blocking port.

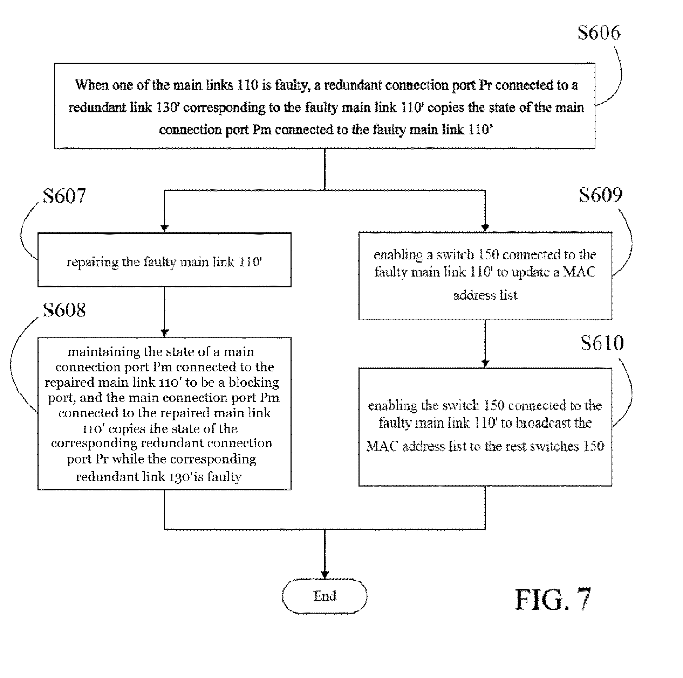

FIG. 7 is a flow chart (2) of a backup method of a ring network according to an embodiment of the disclosure.

In some embodiments, as shown in FIG. 7, after step S606, the backup method of a ring network further includes: repairing the faulty main link 110' (step S607); and maintaining the state of a main connection port Pm connected to the repaired main link 110' to be a blocking port, and the main connection port Pm connected to the repaired main link 110' copies the state of the corresponding redundant connection port Pr while the corresponding redundant link 130' is faulty (step S608). In one embodiment, the step S608 can be replaced by the step 608' (not shown): copying the state of the main connection port Pm connected to the repaired main link 110' as the state of the corresponding redundant connection port Pr without waiting for the corresponding redundant link 130' being faulty. In one case, the main connection port Pm connected to the main link 110' becomes a forwarding port, so that the main link 110' replacing the redundant link 130' delivers a packet. In the other case, the main connection port Pm connected to the main link 110' becomes a blocking port. After the step S608 or S608', the main connection port Pm connected to the repaired main link 110' is in the work state, so the corresponding redundant connection port Pr connected to the redundant link 130' can be set as a blocking port.

Therefore, it can be avoided that a packet is lost because the faulty main link 110' cannot receive a packet when being converted from the backup state to the work state, and that the network stability is affected.

In some embodiments, as shown in FIG. 7, after step S606, the backup method of a ring network further includes: enabling a switch 150 connected to the faulty main link 110' to update a MAC address list (step S609); and enabling the switch 150 connected to the faulty main link 110' to broadcast the MAC address list to the rest switches 150 (step S610).

Therefore, it is unnecessary for each switch 150 to learn new MAC addresses, thereby reducing the quantity of data for broadcasting packets.

In sum, in the backup system 100 of a ring network according to the disclosure, two switches are connected through a main link 110 and a redundant link 130, to form a dual ring network. When one of the main link 110 and the redundant link 130 between the two switches 150 is faulty, the other one may be set to be in a state of the faulty link before failure, to take the turn to deliver a packet, thereby maintaining the operation of the whole network. In the backup system 100 of a ring network, as long as the main link 110 and the redundant link 130 between two switches 150 are both faulty at less than two places, even if multiple main links 110 and/or the redundant links 130 are faulty, the whole network can still continue working normally. Therefore, the backup system 100 of a ring network of the disclosure can solve the problem of low reliability and stability of the conventional ring network.

While the disclosure has been described by the way of example and in terms of the preferred embodiments, it is to be understood that the invention need not be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

## Claims

1. A backup system of a ring network (100), comprising:
a plurality of switches (SW1, SW2, SW3, SW4), wherein each switch (SW1, SW2, SW3, SW4) comprises two main connection ports (Pm) and two redundant connection ports (Pr), one of the two main connection ports (Pm) of each switch (SW1, SW2, SW3, SW4) is connected to one of the two main connection ports (Pm) of an adjacent switch (SW1, SW2, SW3, SW4) via a main link (110), so as to form a main ring network (Rm) in a serial connection manner, one of the two redundant connection ports (Pr) of each switch (SW1, SW2, SW3, SW4) is connected to one of the redundant connection ports (Pr) of an adjacent switch (SW1, SW2, SW3, SW4) via a redundant link (130), so as to form a redundant ring network (Rr) in a serial connection manner, the main links (110) are preset to be in a work state, the redundant links (130) are preset to be in a backup state, and when one of the main links (110') is faulty, the redundant link (130') corresponding to the faulty main link (110') is converted to be in the work state.

2. The backup system of a ring network (100) according to claim 1, wherein the faulty main link (110') is in the backup state after being repaired and is converted to be in the work state when the corresponding redundant link (130') is faulty.

3. The backup system of a ring network (100) according to claim 1, wherein the main link (110) and the redundant link (130) are both bi-directional communication links.

4. The backup system of a ring network (100) according to claim 1, wherein the switch (SW1) connected to the faulty main link (110') updates a media access control (MAC) address list, and broadcasts the MAC address list to the rest switches (SW2, SW3, SW4).

5. The backup system of a ring network (100) according to claim 1, wherein one of the main connection ports (Pm) is preset as a blocking port, the rest main connection ports (Pm) are preset as forwarding ports, the redundant connection ports (Pr) are preset as blocking ports, and when one of the main links (110') is faulty, the main connection ports (Pm) connected to the faulty main link (110') become blocking ports and the redundant connection ports (Pm) connected to the redundant link (130') corresponding to the faulty main link (110') copies the state of the main connection port (Pm) connected to the faulty main link (110').

6. The backup system of a ring network (100) according to claim 5, wherein when the main link (110) and the redundant link (130) between two adjacent switches (SW1, SW2, SW3, SW4) are both faulty, the main connection port (Pm) preset as the blocking port is converted to a forwarding port.

7. The backup system of a ring network (100) according to claim 1, wherein one of the switches (SW1, SW2, SW3, SW4) further comprises an interfacing connection port (190), so as to connect the backup system (100) to an external network.

8. A backup method of a ring network (100), comprising:
providing a plurality of main links (110), to serially connect a plurality of switches (SW1, SW2, SW3, SW4) to form a main ring network (Rm), wherein one of two main connection ports (Pm) of each switch (SW1, SW2, SW3, SW4) is connected to one of two main connection ports (Pm) of an adjacent switch (SW1, SW2, SW3, SW4) via each main link (110);
providing a plurality of redundant links (130), to serially connect a plurality of switches (SW1, SW2, SW3, SW4) to form a redundant ring network (Rr), wherein one of two redundant connection ports (Pr) of each switch (SW1, SW2, SW3, SW4) is connected to one of two redundant connection ports (Pr) of an adjacent switch (SW1, SW2, SW3, SW4) via each redundant link (130);
setting one of the main connection ports (Pm) as a blocking port and the rest main connection ports (Pm) as forwarding ports, so that the main links (110) are preset to be in a work state;
setting the redundant connection ports (Pr) as blocking ports, so that the redundant links (130) are preset to be in a backup state;
detecting connection states of the main links (110); and
when detecting that one of the main links (110') is faulty, enabling the redundant connection ports (Pr) connected to the redundant link (130') corresponding to the faulty main link (110') copies the state of the main connection port (Pm) connected to the faulty main link (110').

9. The backup method of a ring network (100) according to claim 8, further comprising:
repairing the faulty main link (110'); and
maintaining the main connection ports (Pm) connected to the repaired main link (110') to be blocking ports, and copies the state of the redundant connection port (Pr) connected to the faulty redundant link (130') while the corresponding redundant link (130') is faulty.
